# EUROPEAN PATENT APPLICATION

(11) **EP 4 842 058 A1**
(43) Date of publication of application: **18.11.2026**
(21) Application number: 25744487.7
(22) Date of filing: 15.01.2025
(51) Int. Cl.: H04W 36/00

(54) **RADIO ACCESS NETWORK HANDOVER METHOD AND APPARATUS**

(30) Priority: 25.01.2024 CN 202410108406
(71) Applicant: Huawei Technologies Co., Ltd., Shenzhen, Guangdong 518129 (CN)
(72) Inventor: CHEN, Ying, Shenzhen, Guangdong 518129 (CN); HAN, Zhilin, Shenzhen, Guangdong 518129 (CN)
(74) Representative: Huawei European IPR
(86) International application number: PCT/CN2025/072422
(87) International publication number: WO 2025/157044

(57) **Abstract**

Embodiments of this application disclose a radio access network handover method and an apparatus. The method includes: An AMF entity determines that a first radio access network RAN handover is an intra-logical RAN handover; and the AMF entity sends first indication information to a user plane function UPF entity, where the first indication information indicates that the first RAN handover is the intra-logical RAN handover. In this way, an SMF entity and the UPF entity learn that the current RAN handover is the intra-logical RAN handover, and do not need to update the configuration related to the handover, thereby reducing information exchanged among the AMF entity, the SMF entity, and the UPF entity, lowering signaling overhead, and decreasing handover latency.

## Description

This application claims priority to Chinese Patent Application No. 202410108406.5, filed with the China National Intellectual Property Administration on January 25, 2024, and entitled "RADIO ACCESS NETWORK HANDOVER METHOD AND APPARATUS", which is incorporated herein by reference in its entirety.

### TECHNICAL FIELD

This application relates to the field of communication technologies, and in particular, to a radio access network handover method and an apparatus.

### BACKGROUND

Compared with terrestrial communication, satellite communication has unique advantages. For example, satellite communication provides wider coverage, and satellite base stations are less susceptible to damage from natural disasters or external forces. In future 5th generation (5th Generation, 5G) mobile communication, the introduction of satellite communication can extend services to areas such as oceans and forests that terrestrial communication networks cannot cover; enhance reliability of 5G communication, for example, by ensuring better quality communication services for aircraft, trains, and users on these means of transportation; and provide more data transmission resources to improve the network rate. Therefore, supporting both terrestrial communication and satellite communication is an inevitable trend of future 5G communication, offering significant benefits in terms of wide coverage, reliability, multi-connectivity, high throughput, and the like. The most significant feature of satellite communication is its large round-trip transmission latency. In addition, terminal devices must frequently perform beam switching and cell handover due to the movement of satellites. Therefore, integration of satellites and 5G communication requires enhancements to existing 5G protocols to adapt to satellite communication.

In satellite communication scenarios involving regenerative satellites, next-generation radio access network (next-generation radio access network, NG-RAN) handovers introduce frequent information exchange between the access network and the core network, and the core network must frequently update handover-related configurations through frequent information exchange, resulting in large signaling overhead and high handover latency.

### SUMMARY

Embodiments of this application provide a radio access network handover method and an apparatus, so that a core network device learns that the current RAN handover is an intra-logical RAN handover, and does not need to update the configuration related to the handover, thereby reducing information exchanged among core network devices, lowering signaling overhead, and decreasing handover latency.

According to a first aspect, an embodiment of this application provides a radio access network handover method. The method is applied to an AMF entity, or is applied to a chip or a circuit configured in the AMF entity, and includes:
determining that a first radio access network RAN handover is an intra-logical RAN handover, where the first RAN handover is a handover from a second access network device to a first access network device; and sending first indication information to a user plane function UPF entity, where the first indication information indicates that the first RAN handover is the intra-logical RAN handover. In this way, an SMF entity and the UPF entity learn that the current RAN handover is the intra-logical RAN handover, and do not need to update a configuration related to the handover, thereby reducing information exchanged among the AMF entity, the SMF entity, and the UPF entity, lowering signaling overhead, and decreasing handover latency.

In a possible design, the intra-logical RAN handover indicates that the first access network device and the second access network device serve a same cell, store same configuration of a terminal device, and communicate with each other via an Xn interface.

In a possible design, second indication information sent by the first access network device or the second access network device is received, where the second indication information indicates that the first RAN handover is the intra-logical RAN handover. The first access network device or the second access network device indicates that the current RAN handover is the intra-logical RAN handover, so that the core network device learns that current RAN handover is the intra-logical RAN handover, and does not need to update the configuration related to the handover, thereby reducing information exchanged among core network devices, lowering signaling overhead, and decreasing handover latency.

In a possible design, acknowledgment information is sent to the first access network device or the second access network device based on the second indication information. Because the AMF entity determines that the first RAN handover is the intra-logical RAN handover, the AMF entity, the SMF entity, and the UPF entity do not need to update a configuration related to the first RAN handover through information exchange. Therefore, after receiving the second indication information, the AMF entity directly sends the acknowledgment information to the first access network device or the second access network device without waiting for the SMF entity and the UPF entity to update the configuration related to the first RAN handover, thereby improving handover efficiency.

In a possible design, it is determined, based on the first ephemeris information of the first access network device and the second ephemeris information of the second access network device, that the first RAN handover is the intra-logical RAN handover. The AMF entity determines that the first RAN handover is the intra-logical RAN handover, and then sends the first indication information to the UPF entity, to indicate that the current RAN handover is the intra-logical RAN handover. In this way, an SMF entity and the UPF entity learn that the current RAN handover is the intra-logical RAN handover, and do not need to update the configuration related to the handover, thereby reducing information exchanged among the AMF entity, the SMF entity, and the UPF entity, lowering signaling overhead, and decreasing handover latency.

In a possible design, first marking information from the second access network device is received; and the first marking information is sent to the UPF entity, where the first marking information indicates to send data to the first access network device. In this way, the UPF entity determines that the second access network device has ended data forwarding with the first access network device. Therefore, the UPF entity then sends data to the first access network device, to ensure data integrity of the first access network device.

In a possible design, handover preparation time is sent to the UPF entity or the second access network device, where the handover preparation time indicates a waiting duration for performing the intra-logical RAN handover. In consideration of handover latency, beam direction adjustment latency of a terrestrial station, and the like, the handover preparation time is indicated to the UPF entity or the second access network device, and an intra-logical RAN handover is performed within a handover preparation time period or within the handover preparation time, to ensure a successful handover.

In a possible design, a manner of the first RAN handover includes at least one of the following: conditional handover, handover without changing a physical cell identifier PCI, or random access channel-free handover.

According to a second aspect, an embodiment of this application provides a radio access network handover method. The method is applied to a UPF entity, or is applied to a chip or a circuit configured in the UPF entity, and includes:
receiving first indication information from an access and mobility management function AMF entity, where the first indication information indicates that a first RAN handover is an intra-logical RAN handover, and the first RAN handover is a handover from the second access network device to a first access network device; and maintaining, based on the first indication information, a configuration related to the first RAN handover. In this way, the UPF entity learns that the current RAN handover is the intra-logical RAN handover, and does not need to update the configuration related to the handover, thereby reducing information exchanged among the AMF entity, the SMF entity, and the UPF entity, lowering signaling overhead, and decreasing handover latency.

In a possible design, the intra-logical RAN handover indicates that the first access network device and the second access network device serve a same cell, store same configuration of a terminal device, and communicate with each other via an Xn interface.

In a possible design, first marking information from the AMF entity is received, where the first marking information indicates a completion status of data forwarding between the second access network device and the first access network device; and the data is sent to the first access network device based on the first marking information. The UPF entity determines, based on the first marking information, that the second access network device has ended data forwarding with the first access network device, and then the UPF entity sends the data to the first access network device, to ensure data integrity of the first access network device.

In a possible design, second marking information is sent to the second access network device, where the second marking information indicates a completion status of data transmission between a user plane function UPF entity and the second access network device. The second access network device may send the second marking information to the first access network device. Because data sent by the UPF entity or the second access network device and received by the first access network device is out of order, the first access network device may sort the received data based on the second marking information, to ensure accuracy of the data.

In a possible design, handover preparation time from the AMF entity is received, where the handover preparation time indicates a waiting duration for performing the intra-logical RAN handover; and the second marking information is sent to the second access network device based on the handover preparation time. In consideration of handover latency, beam direction adjustment latency of a terrestrial station, and the like, the handover preparation time indicated by the AMF entity is received, and the intra-logical RAN handover is performed within a handover preparation time period or within the handover preparation time, to ensure a successful handover.

In a possible design, a manner of the first RAN handover includes at least one of the following: conditional handover, handover without changing a physical cell identifier PCI, or random access channel-free handover.

According to a third aspect, an embodiment of this application provides a radio access network handover method. The method is applied to a first access network device, or a chip or a circuit configured in the first access network device, and includes:
determining that a first radio access network RAN handover is an intra-logical RAN handover, and the first RAN handover is a handover from a second access network device to the first access network device; and sending second indication information to an access and mobility management function AMF entity, where the second indication information indicates that the first RAN handover is the intra-logical RAN handover. The AMF entity indicates that the current RAN handover is the intra-logical RAN handover, so that the AMF entity, an SMF entity, and a UPF entity learn that the current RAN handover is the intra-logical RAN handover, and do not need to update the configuration related to the handover, thereby reducing information exchanged among the AMF entity, the SMF entity, and the UPF entity, lowering signaling overhead, and decreasing handover latency.

In a possible design, the intra-logical RAN handover indicates that the first access network device and the second access network device serve a same cell, store same configuration of a terminal device, and communicate with each other via an Xn interface.

In a possible design, acknowledgment information from the AMF entity is received. Because the AMF entity determines that the first RAN handover is the intra-logical RAN handover, the AMF entity, the SMF entity, and the UPF entity do not need to update a configuration related to the first RAN handover through information exchange. Therefore, after receiving the second indication information, the AMF entity directly sends the acknowledgment information to the first access network device without waiting for the SMF entity and the UPF entity to update the configuration related to the first RAN handover, thereby improving handover efficiency.

In a possible design, data from a user plane function UPF entity is received. The UPF entity determines, based on first marking information, that the second access network device has ended data forwarding with the first access network device, and then the UPF entity sends the data to the first access network device, to ensure data integrity of the first access network device.

In a possible design, if the data sent by the UPF entity is not received, a notification message is sent to the second access network device, where the notification message indicates the second access network device to send the first marking information to the AMF entity, and the first marking information indicates a completion status of data forwarding between the second access network device and the first access network device. When the data is not received, the notification message is sent to the second access network device, to indicate the second access network device to continue to send the first marking information to the AMF entity, so that the AMF entity notifies the UPF entity to send the data to the first access network device, to ensure that the data is successfully sent.

According to a fourth aspect, an embodiment of this application provides a radio access network handover method. The method is applied to a second access network device, or a chip or a circuit configured in the second access network device, and includes:
determining that a first radio access network RAN handover is an intra-logical RAN handover, and the first RAN handover is a handover from the second access network device to the first access network device; and sending second indication information to an access and mobility management function AMF entity, where the second indication information indicates that the first RAN handover is the intra-logical RAN handover. The AMF entity indicates that the current RAN handover is the intra-logical RAN handover, so that the AMF entity, an SMF entity, and a UPF entity learn that the current RAN handover is the intra-logical RAN handover, and do not need to update the configuration related to the handover, thereby reducing information exchanged among the AMF entity, the SMF entity, and the UPF entity, lowering signaling overhead, and decreasing handover latency.

In a possible design, the intra-logical RAN handover indicates that the first access network device and the second access network device serve a same cell, store same configuration of a terminal device, and communicate with each other via an Xn interface.

In a possible design, handover preparation time from the AMF is received, where the handover preparation time indicates a waiting duration for performing the intra-logical RAN handover. In consideration of handover latency, beam direction adjustment latency of a terrestrial station, and the like, the handover preparation time sent by the AMF entity is received, and an intra-logical RAN handover is performed within a handover preparation time period or within the handover preparation time, to ensure a successful handover.

In a possible design, first marking information is sent to the AMF entity, where the first marking information indicates a completion status of data forwarding between the second access network device and the first access network device. In this way, the AMF entity sends the first marking information to the UPF entity, and the UPF entity determines that the second access network device has ended data forwarding with the first access network device. Therefore, the UPF entity then sends data to the first access network device, to ensure data integrity of the first access network device.

In a possible design, a notification message from the first access network device is received, and the first marking information is sent to the AMF entity based on the notification message. When the first access network device does not receive the data, the second access network device continues to send the first marking information to the AMF entity, so that the AMF entity indicates the UPF entity to send the data to the first access network device, to ensure that the data is successfully sent.

In a possible design, second marking information from a user plane function UPF entity is received, where the second marking information indicates a completion status of data transmission between the user plane function UPF entity and the second access network device; and the second marking information is sent to the first access network device, where the second marking information is used for assisting the first access network device in sorting received data. Because data sent by the UPF entity or the second access network device and received by the first access network device is out of order, the second marking information is sent to the first access network device, so that the first access network device sorts the received data, to ensure accuracy of the data.

According to a fifth aspect, an embodiment of this application provides a communication apparatus. The communication apparatus includes:
a processing module, configured to determine that a first radio access network RAN handover is an intra-logical RAN handover, where the first RAN handover is a handover from a second access network device to a first access network device; and
a sending module, configured to send first indication information to a user plane function UPF entity, where the first indication information indicates that the first RAN handover is the intra-logical RAN handover.

In a possible design, the intra-logical RAN handover indicates that the first access network device and the second access network device serve a same cell, store same configuration of a terminal device, and communicate with each other via an Xn interface.

In a possible design, the communication apparatus further includes a receiving module, configured to receive second indication information sent by the first access network device or the second access network device, where the second indication information indicates that the first RAN handover is the intra-logical RAN handover.

In a possible design, the sending module is further configured to send acknowledgment information to the first access network device or the second access network device based on the second indication information.

In a possible design, the processing module is further configured to determine, based on first ephemeris information of the first access network device and second ephemeris information of the second access network device, that the first RAN handover is the intra-logical RAN handover.

In a possible design, the receiving module is further configured to receive first marking information from the second access network device; and
the sending module is further configured to send the first marking information to the UPF entity, where the first marking information indicates to send data to the first access network device.

In a possible design, the sending module is further configured to send handover preparation time to the UPF entity or the second access network device, where the handover preparation time indicates a waiting duration for performing the intra-logical RAN handover.

In a possible design, a manner of the first RAN handover includes at least one of the following: conditional handover, handover without changing a physical cell identifier PCI, or random access channel-free handover.

For operations performed by the communication apparatus and beneficial effects thereof, refer to the method according to the first aspect and the beneficial effects thereof. Repeated parts are not described again.

According to a sixth aspect, an embodiment of this application provides a communication apparatus. The communication apparatus includes:
a receiving module, configured to receive first indication information from an access and mobility management function AMF entity, where the first indication information indicates that a first RAN handover is an intra-logical RAN handover, and the first RAN handover is a handover from a second access network device to a first access network device; and
a processing module, configured to maintain, based on the first indication information, a configuration related to the first RAN handover.

In a possible design, the intra-logical RAN handover indicates that the first access network device and the second access network device serve a same cell, store same configuration of a terminal device, and communicate with each other via an Xn interface.

In a possible design, the receiving module is further configured to receive first marking information from the AMF entity, where the first marking information indicates a completion status of data forwarding between the second access network device and the first access network device; and the sending module is configured to send data to the first access network device based on the first marking information.

In a possible design, the sending module is further configured to send second marking information to the second access network device, where the second marking information indicates a completion status of data transmission between a user plane function UPF entity and the second access network device.

In a possible design, the receiving module is further configured to receive handover preparation time from the AMF entity, where the handover preparation time indicates a waiting duration for performing the intra-logical RAN handover; and the sending module is further configured to send the second marking information to the second access network device based on the handover preparation time.

In a possible design, a manner of the first RAN handover includes at least one of the following: conditional handover, handover without changing a physical cell identifier PCI, or random access channel-free handover.

For operations performed by the communication apparatus and beneficial effects thereof, refer to the method according to the second aspect and the beneficial effects thereof. Repeated parts are not described again.

According to a seventh aspect, an embodiment of this application provides a communication apparatus. The communication apparatus includes:
a processing module, configured to determine that a first radio access network RAN handover is an intra-logical RAN handover, where the first RAN handover is a handover from a second access network device to a first access network device; and
a sending module, configured to send second indication information to an access and mobility management function AMF entity, where the second indication information indicates that the first RAN handover is the intra-logical RAN handover.

In a possible design, the intra-logical RAN handover indicates that the first access network device and the second access network device serve a same cell, store same configuration of a terminal device, and communicate with each other via an Xn interface.

In a possible design, the communication apparatus further includes a receiving module, configured to receive acknowledgment information from the AMF entity.

In a possible design, the receiving module is further configured to receive data from a user plane function UPF entity.

In a possible design, the sending module is further configured to if the data sent by the UPF entity is not received, send a notification message to the second access network device, where the notification message indicates the second access network device to send first marking information to the AMF entity, and the first marking information indicates a completion status of data forwarding between the second access network device and the first access network device.

For operations performed by the communication apparatus and beneficial effects thereof, refer to the method according to the third aspect and the beneficial effects thereof. Repeated parts are not described again.

According to an eighth aspect, an embodiment of this application provides a communication apparatus. The communication apparatus includes:
a processing module, configured to determine that a first radio access network RAN handover is an intra-logical RAN handover, where the first RAN handover is a handover from a second access network device to a first access network device; and
a sending module, configured to send second indication information to an access and mobility management function AMF entity, where the second indication information indicates that the first RAN handover is the intra-logical RAN handover.

In a possible design, the intra-logical RAN handover indicates that the first access network device and the second access network device serve a same cell, store same configuration of a terminal device, and communicate with each other via an Xn interface.

In a possible design, the communication apparatus further includes a receiving module, configured to receive handover preparation time from the AMF entity, where the handover preparation time indicates a waiting duration for performing the intra-logical RAN handover.

In a possible design, the sending module is further configured to send first marking information to the AMF entity, where the first marking information indicates a completion status of data forwarding between the second access network device and the first access network device.

In a possible design, the receiving module is further configured to receive a notification message from the first access network device; and the sending module is further configured to send the first marking information to the AMF entity based on the notification message.

In a possible design, the receiving module is further configured to receive second marking information from a user plane function UPF entity, where the second marking information indicates a completion status of data transmission between the user plane function UPF entity and the second access network device; and the sending module is further configured to send the second marking information to the first access network device, where the second marking information is used for assisting the first access network device in sorting received data.

For operations performed by the communication apparatus and beneficial effects thereof, refer to the method according to the fourth aspect and the beneficial effects thereof. Repeated parts are not described again.

According to a ninth aspect, this application provides a communication apparatus. The communication apparatus includes a processor and a memory. The memory is configured to store a computer program. The processor is configured to execute the computer program stored in the memory, to enable the communication apparatus to perform the method according to any one of the first aspect or the possible designs.

According to a tenth aspect, this application provides a communication apparatus. The communication apparatus includes a processor and a memory. The memory is configured to store a computer program. The processor is configured to execute the computer program stored in the memory, to enable the communication apparatus to perform the method according to any one of the second aspect or the possible designs.

According to an eleventh aspect, this application provides a communication apparatus. The communication apparatus includes a processor and a memory. The memory is configured to store a computer program. The processor is configured to execute the computer program stored in the memory, to enable the communication apparatus to perform the method according to any one of the third aspect or the possible designs.

According to a twelfth aspect, this application provides a communication apparatus. The communication apparatus includes a processor and a memory. The memory is configured to store a computer program. The processor is configured to execute the computer program stored in the memory, to enable the communication apparatus to perform the method according to any one of the fourth aspect or the possible designs.

According to a thirteenth aspect, this application provides a computer-readable storage medium. The computer-readable storage medium is configured to store a computer program, and when the computer program is executed, the method according to any one of the first aspect to the fourth aspect is implemented.

According to a fourteenth aspect, this application provides a computer program product including a computer program. When the computer program is executed, the method according to any one of the first aspect to the fourth aspect is implemented.

According to a fifteenth aspect, an embodiment of this application provides a communication system. The communication system includes an AMF entity, a UPF entity, and an access network device. The AMF entity is configured to perform the steps in the first aspect. The UPF entity is configured to perform the steps in the second aspect. The access network device is configured to perform the steps in the third aspect or the fourth aspect.

According to a sixteenth aspect, a chip is provided. The chip includes a processor and a communication interface. The communication interface is configured to communicate with an external device or an internal device. The processor is configured to implement the method according to the foregoing aspects.

In a possible design, the chip may further include a memory. The memory stores a computer program or instructions. The processor is configured to execute the computer program or the instructions stored in the memory, or another program or instructions. When the computer program or the instructions are executed, the processor is configured to implement the methods according to the foregoing aspects.

In a possible design, the chip may be integrated into an AMF entity, a UPF entity, and an access network device.

### BRIEF DESCRIPTION OF DRAWINGS

FIG. 1 is a diagram of an architecture of a communication system according to an embodiment of this application;
FIG. 2A and FIG. 2B are a schematic flowchart of a RAN handover;
FIG. 3 is a schematic flowchart of a radio access network handover method according to an embodiment of this application;
FIG. 4 is a schematic flowchart of another radio access network handover method according to an embodiment of this application;
FIG. 5 is a schematic flowchart of another radio access network handover method according to an embodiment of this application;
FIG. 6 is a schematic flowchart of another radio access network handover method according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of another communication apparatus according to an embodiment of this application;
FIG. 10 is a diagram of a structure of an AMF entity according to an embodiment of this application;
FIG. 11 is a diagram of a structure of a UPF entity according to an embodiment of this application; and
FIG. 12 is a diagram of a structure of an access network device according to an embodiment of this application.

### DESCRIPTION OF EMBODIMENTS

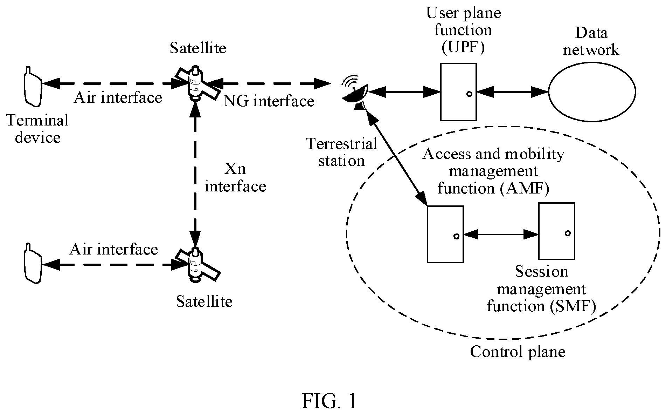

FIG. 1 is a diagram of an architecture of a communication system according to an embodiment of this application. The communication system includes a terminal device, an access network device, a core network device, and a terrestrial station. The terminal device may access a network via an air interface (the air interface may be various types of air interfaces, for example, a 5G air interface). The access network device is deployed on a satellite, and is connected to a terrestrial core network device through a radio link (an NG interface). In addition, there is a radio link (an Xn interface) between satellites, to implement signaling exchange and user data transmission between access network devices.

The terminal device is a device that can access a satellite network via the air interface, initiate services such as a call and network access, and provide voice and/or data connectivity for users. The terminal device may also be referred to as user equipment (user equipment, UE), a mobile station (mobile station, MS), a mobile terminal (mobile terminal, MT), or the like, for example, a handheld device or a vehicle-mounted device with a wireless connection function. Currently, examples of some terminals are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), and a wireless terminal in smart home (smart home).

The access network device mainly provides radio access services, schedules radio resources to for access terminal device, and provides a reliable wireless transmission protocol, a data encryption protocol, and the like. The access network device may also be referred to as a base station. Currently, examples of some RAN nodes are: a continuously evolved NodeB (gNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), and a wireless fidelity (wireless fidelity, Wi-Fi) access point (access point, AP), or the like.

The core network device is mainly responsible for services such as user access control, mobility management, session management, user security authentication, and charging. The core network includes a plurality of functional units, and may include a control plane functional entity and a data plane functional entity. Currently, some examples of the core network device are an access and mobility management function (access and mobility management function, AMF) entity, a session management function (session management function, SMF) entity, a user plane function (user plane function, UPF) entity, and the like. Details are not listed one by one herein. The AMF entity may be responsible for access management and mobility management of the terminal. The SMF entity may be responsible for session management, for example, session establishment of a user. The UPF entity may be a functional entity on a user plane, and is mainly responsible for a connection to an external network. It should be noted that the entity in this application may also be referred to as a network element. For example, the AMF entity may also be referred to as an AMF network element. For another example, the SMF entity may also be referred to as an SMF network element.

The terrestrial station is responsible for forwarding signaling and service data between a satellite base station and the core network.

The air interface is a radio link between the terminal device and the access network device.

Xn interface is an interface between access network devices, and is mainly for signaling exchange such as a handover.

The NG interface is an interface between the access network device and the core network device, and is mainly for exchanging signaling such as non-access stratum (non-access stratum, NAS) of a core network and service data of a user.

This application is applied to a long term evolution (long term evolution, LTE) system, a universal mobile telecommunications system (universal mobile telecommunications system, UMTS), a code division multiple access (code division multiple access, CDMA) system, a wireless local area network (wireless local area network, WLAN), 5G, or a future communication network. This application relates to a terminal device and radio access network elements, such as an access network device and a terrestrial station, configured to perform uplink and downlink data communication according to a wireless communication protocol.

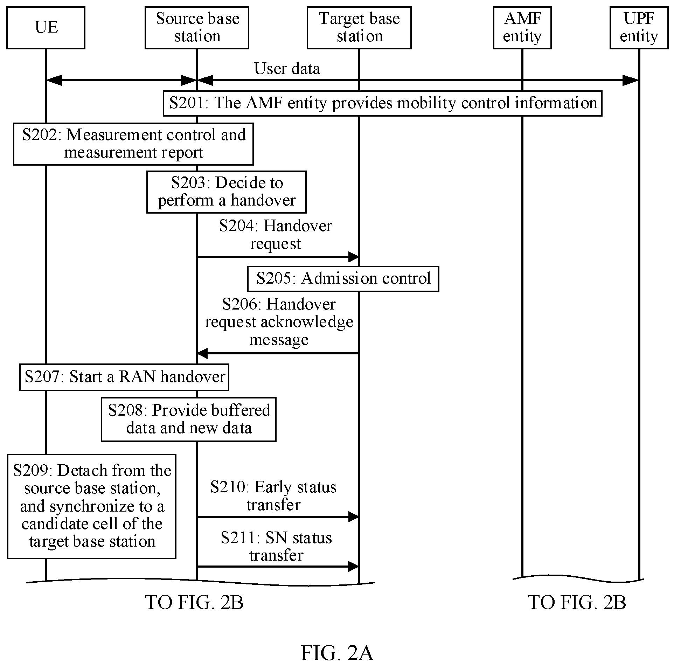

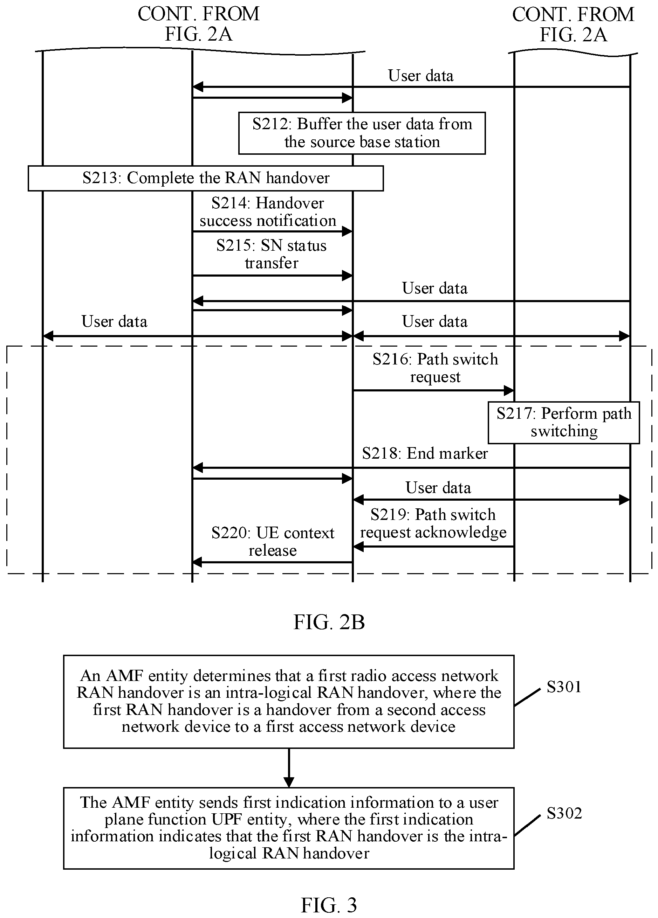

FIG. 2A and FIG. 2B are a schematic flowchart of a RAN handover. This process mainly includes the following steps.

S201: An AMF entity provides mobility control information.

S202: UE exchanges measurement control and a measurement report with a source base station.

S203: The source base station decides to perform a handover.

S204: The source base station sends a handover request (handover request) to a target base station.

S205: The target base station performs admission control (admission control).

S206: The target base station sends a handover request acknowledge (handover request acknowledge) message to the source base station.

S207: The source base station and the UE start a RAN handover.

S208: The source base station provides buffered data and new data.

S209: The UE detaches from the source base station, and synchronizes to a candidate cell of the target base station.

S210: The source base station sends an early status transfer message to the target base station.

S211: The source base station sends a sequence number (sequence number, SN) status transfer message to the target base station. Then, the UPF entity sends user data to the source base station, and the source base station forwards the user data to the target base station.

S212: The target base station buffers the user data from the source base station.

S213: The UE, the target base station, and the source base station complete the RAN handover.

S214: The source base station sends a handover success (handover success) notification to the target base station.

S215: The source base station sends a sequence number (sequence number, SN) status transfer message to the target base station. Then, the UPF entity sends the user data to the source base station, and the source base station forwards the user data to the target base station. Subsequently, the user data is forwarded among the UPF entity, the target base station, and the UE.

After the handover between the source base station and the target base station is completed through an access network, the following operations are performed as shown in the dashed-line box.

S216: The target base station sends a path switch request (path switch request) to the AMF entity.

S217: The AMF entity and the UPF entity perform path switching.

Specifically, after receiving the path switch request, the AMF entity notifies an SMF entity to which a protocol data unit (Protocol Data Unit, PDU) session affected by the switch belongs, and the SMF entity provides NG-RAN N3 tunnel information to the UPF entity. The AMF entity, the SMF entity, and the UPF entity complete a relevant configuration, path information update, tunnel information update, or the like of the PDU session through mutual interaction.

S218: The UPF entity sends an end marker to the source base station, and the source base station sends the end marker to the target base station. Then, the UPF entity sends the user data to the target base station, and the target base station reorders the user data based on the end marker.

S219: The AMF entity sends a path switch request acknowledgment (path switch request acknowledge) to the target base station.

S220: The target base station notifies the source base station of UE context release (UE context release).

In satellite communication scenarios involving regenerative satellites, as shown in the dashed-line box in FIG. 2B, NG-RAN handovers introduce frequent information exchange between the NG-RAN and the AMF entity, and handover-related configurations also need to be updated through frequent information exchange between the AMF entity, the SMF entity, and the UPF entity, resulting in high signaling overhead and high handover latency.

To resolve the foregoing technical problems, embodiments of this application provide the following solutions.

Embodiments of this application mainly relate to an improvement solution after a handover between a source base station and a target base station is completed on the access network side. For steps before the handover between the source base station and the target base station is completed on the access network side, refer to S201 to S215 shown in FIG. 2A and FIG. 2B. Details are not described again in embodiments of this application. The following mainly describes steps after the handover between the source base station and the target base station is completed on the access network side. FIG. 3 is a schematic flowchart of a radio access network handover method according to an embodiment of this application. The method includes: S301: An AMF entity determines that a first radio access network RAN handover is an intra-logical RAN handover, where the first RAN handover is a handover from a second access network device to a first access network device. S302: The AMF entity sends first indication information to a user plane function UPF entity, where the first indication information indicates that the first RAN handover is the intra-logical RAN handover. Optionally, the AMF entity sends the first indication information to the UPF entity through the SMF entity. Information exchange between the AMF entity and the UPF entity is similar. Details are not described one by one below. The AMF entity indicates that the current RAN handover is the intra-logical RAN handover, so that the SMF entity and the UPF entity learn that the current RAN handover is the intra-logical RAN handover, and do not need to update the configuration related to the handover, thereby reducing information exchanged among the AMF entity, the SMF entity, and the UPF entity, lowering signaling overhead, and decreasing handover latency. The following describes in detail the solution provided in this embodiment of this application.

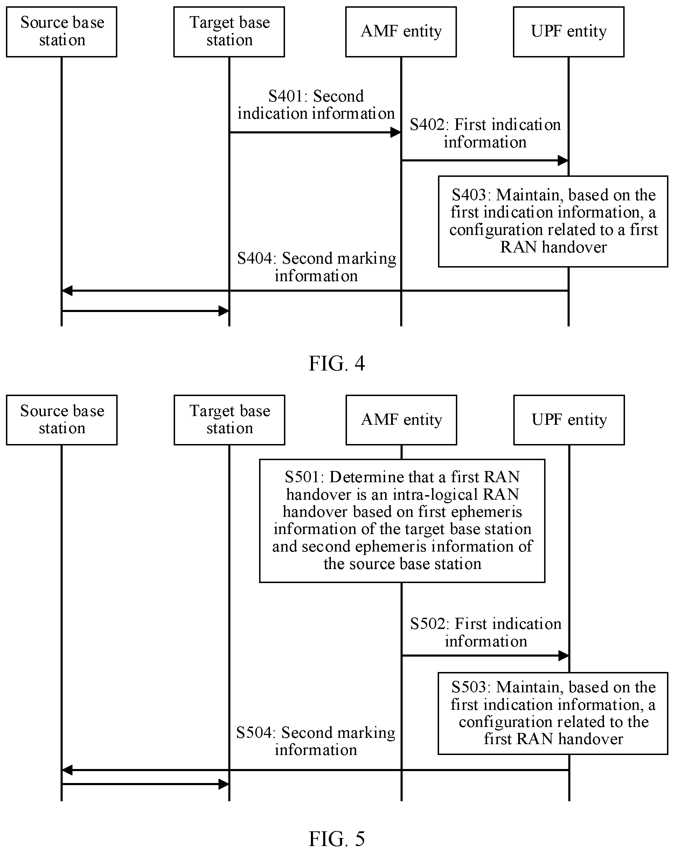

FIG. 4 is a schematic flowchart of a radio access network handover method according to an embodiment of this application. The following uses the first access network device as a target base station and the second access network device as a source base station for description. The method mainly includes the following steps.

S401: The target base station sends second indication information to an AMF entity, where the second indication information indicates that a first RAN handover is an intra-logical RAN handover.

Specifically, after the first RAN handover between the source base station and the target base station is completed on the access network side in different manners, the target base station determines that the first RAN handover is the intra-logical RAN handover, and then sends the second indication information to the AMF entity. The first RAN handover is a handover from the source base station to the target base station, and a manner of the first RAN handover includes at least one of the following: conditional handover, handover without changing a physical cell identifier PCI, or random access channel-free handover.

The intra-logical RAN handover (also referred to as an intra-NG-RAN handover) is a handover from the source base station to the target base station. The source base station and the target base station serve a same cell, store a same configuration of a terminal device, and communicate with each other via an Xn interface. The configuration of the terminal device may include at least one of the following information: UE context, a base station identifier (identifier, ID), a cell ID, a communication configuration of the terminal device, an ID allocated to UE, or the like. For example, in a scenario in which a terrestrial cell is bound to a geographical location, due to mobility of satellite base stations, the satellite base stations serve terrestrial cell in a continuous manner. A satellite base station 1 provides services for a cell 1 in a time period t1 to t2. The handover is performed from the satellite base station 1 to a satellite base station 2 at a moment t2, and the satellite base station 2 provides services for the cell 1 in a time period t2 to t3. The handover from the satellite base station 1 to the satellite base station 2 may be referred to as the intra-logical RAN handover.

S402: The AMF entity sends first indication information to a UPF entity, where the first indication information indicates that the first RAN handover is the intra-logical RAN handover.

Specifically, after receiving the second indication information sent by the target base station, the AMF entity determines that the first RAN handover is the intra-logical RAN handover, and then the AMF entity may send the first indication information to the UPF entity.

Optionally, the AMF entity may send acknowledgment information to the target base station based on the second indication information. Optionally, the AMF entity may send the acknowledgment information to the source base station, and after receiving the acknowledgment information, the source base station sends the acknowledgment information to the target base station. The acknowledgment information indicates acknowledgement that the first RAN handover is the intra-logical RAN handover, and the acknowledgment information may also indicate to acknowledge that the first RAN handover is to be performed. Because the AMF entity determines that the first RAN handover is the intra-logical RAN handover, the AMF entity, the SMF entity, and the UPF entity do not need to update a configuration related to the first RAN handover through information exchange. Therefore, after receiving the second indication information, the AMF entity directly sends the acknowledgment information to the target base station without waiting for the SMF entity and the UPF entity to update the configuration related to the first RAN handover.

S403: The UPF entity maintains, based on the first indication information, the configuration related to the first RAN handover.

It may be understood that, the UPF entity determines that the first RAN handover is the intra-logical RAN handover, and does not update the configuration related to the first RAN handover. The AMF entity, the UPF entity, and the AMF entity do not need to update the configuration related to the first RAN handover through information exchange. The configuration related to the first RAN handover may include a relevant configuration, path information, tunnel information, or the like of a PDU session.

S404: The UPF entity sends second marking information to the source base station, where the second marking information indicates a completion status of data transmission between the UPF entity and the source base station.

Specifically, the UPF entity may directly send the second marking information to the source base station without waiting for the configuration related to the first RAN handover to be updated. The source base station receives the second marking information from the UPF entity, and then sends the second marking information to the target base station, where the second marking information is used for assisting the target base station in sorting received data (for example, user data). Because data sent by the UPF entity or the source base station and received by the target base station is out of order, the target base station may sort the received data based on the second marking information, to ensure accuracy and reliability of the data.

Optionally, in consideration of handover latency, beam direction adjustment latency of a terrestrial station, and the like, the AMF entity may send the handover preparation time to the UPF entity, where the handover preparation time indicates a waiting duration required for performing the intra-logical RAN handover, so that the UPF entity can send the second marking information to the source base station based on the handover preparation time. The handover preparation time may indicate a time period in which sending of the second marking information is allowed. The UPF entity may wait for a period of time and then send the second marking information to the source base station within the handover preparation time. Alternatively, the handover preparation time may indicate a time period that needs to be waited before sending of the second marking information. The UPF entity may send the second marking information to the source base station after the handover preparation time. Alternatively, the handover preparation time may indicate a time point at which sending of the second marking information is allowed. The UPF entity may send the second marking information to the source base station after the handover preparation time is reached.

The handover preparation time may be predefined. Alternatively, the handover preparation time may be determined by the AMF entity based on first ephemeris information of the target base station and second ephemeris information of the source base station, or may be determined by the AMF entity based on the first ephemeris information of the target base station, the second ephemeris information of the source base station, and location information of the terminal device. The first ephemeris information or the second ephemeris information may include an orbital parameter ephemeris, or may be a position-and-velocity state vector ephemeris. The orbital parameter ephemeris includes parameters such as a semi-major axis (semi-major axis) of a satellite, an eccentricity (eccentricity), an argument of periapsis (argument of periapsis), a longitude of ascending node (longitude of ascending node), an inclination (inclination), and a mean anomaly (mean anomaly) of epoch time (epoch time).

The first indication information and the handover preparation time may be included in the same message or different messages. The first indication information and the handover preparation time are sent in sequence, or the first indication information and the handover preparation time may be sent at the same time.

Optionally, the AMF entity may alternatively send the handover preparation time to the source base station, where the handover preparation time indicates a waiting duration required for performing the intra-logical RAN handover, to notify the source base station to be aligned with a core network side, so that the source base station receives, based on the handover preparation time, the second marking information sent by the UPF entity, for example, receives the second marking information sent by the UPF entity within the handover preparation time or after the handover preparation time.

Optionally, after sending the second marking information to the source base station, the UPF entity may send data to the target base station or receive data from the target base station.

In this embodiment of this application, the AMF entity determines, by receiving the second indication information sent by the target base station, that the first RAN handover is the intra-logical RAN handover, and then sends the first indication information to the UPF entity, where the first indication information indicates that the first RAN handover is the intra-logical RAN handover. In this way, the SMF entity and the UPF entity learn that the current RAN handover is the intra-logical RAN handover, and do not need to update the configuration related to the handover, thereby reducing information exchanged among the AMF entity, the SMF entity, and the UPF entity, lowering signaling overhead, and decreasing handover latency.

FIG. 5 is a schematic flowchart of a radio access network handover method according to an embodiment of this application. The method mainly includes the following steps.

S501: An AMF entity determines, based on first ephemeris information of a target base station and second ephemeris information of a source base station, that a first RAN handover is an intra-logical RAN handover.

Specifically, after the first RAN handover between the source base station and the target base station is completed on the access network side in different manners, the AMF entity may determine, based on the first ephemeris information of the target base station and the second ephemeris information of the source base station, that the first RAN handover is the intra-logical RAN handover. For explanations of the intra-logical RAN handover and a manner of the first RAN handover, refer to the descriptions in the embodiment shown in FIG. 4. Details are not described herein again.

The first ephemeris information may include an ephemeris of the target base station, and the ephemeris of the target base station may be used for determining a location of the target base station. The second ephemeris information may include an ephemeris of the source base station, and the ephemeris of the source base station may be used for determining a location of the source base station. The AMF entity may determine, based on the location of the target base station and the location of the source base station, whether the first RAN handover is the intra-logical RAN handover. For example, whether the source base station and the target base station cover a same geographical region is determined based on the location of the target base station and the location of the source base station. If the target base station and the source base station cover the same geographical region and provide services for a same terminal device, it is determined that the first RAN handover is the intra-logical RAN handover.

Optionally, the AMF entity may also receive second indication information from the source base station, where the second indication information indicates that the first RAN handover is the intra-logical RAN handover.

S502: The AMF entity sends first indication information to a UPF entity, where the first indication information indicates that the first RAN handover is the intra-logical RAN handover.

Specifically, after receiving the second indication information sent by the target base station, the AMF entity determines that the first RAN handover is the intra-logical RAN handover, and then the AMF entity may send the first indication information to the UPF entity.

It should be noted that, because the AMF entity determines that the first RAN handover is the intra-logical RAN handover, the AMF entity does not need to send acknowledgment information to the source base station or the target base station.

S503: The UPF entity maintains, based on the first indication information, the configuration related to the first RAN handover.

S504: The UPF entity sends second marking information to the source base station, where the second marking information indicates a completion status of data transmission between the UPF entity and the source base station.

Implementation processes of S503 and S504 is the same as implementation processes of S403 and S404. For a specific implementation of S503 and S504, refer to S403 and S404 in the foregoing embodiment. Details are not described herein again.

In this embodiment of this application, the AMF entity determines that the first RAN handover is the intra-logical RAN handover, and then sends the first indication information to the UPF entity, where the first indication information indicates that the first RAN handover is the intra-logical RAN handover. In this way, an SMF entity and the UPF entity learn that the current RAN handover is the intra-logical RAN handover, and do not need to update the configuration related to the handover, thereby reducing information exchanged among the AMF entity, the SMF entity, and the UPF entity, lowering signaling overhead, and decreasing handover latency.

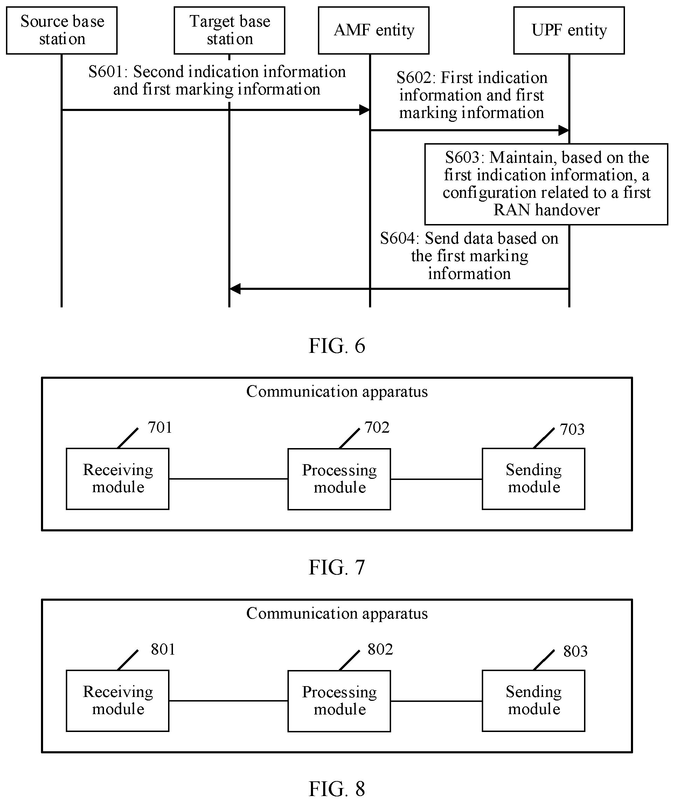

FIG. 6 is a schematic flowchart of a radio access network handover method according to an embodiment of this application. The method mainly includes the following steps.

S601: A source base station sends second indication information and first marking information to an AMF entity, where the second indication information indicates that a first RAN handover is an intra-logical RAN handover, and the first marking information indicates a completion status of data forwarding between the source base station and a target base station.

Specifically, after the first RAN handover between the source base station and the target base station is completed on the access network side in different manners, the source base station determines that the first RAN handover is the intra-logical RAN handover, and sends the second indication information and the first marking information to the AMF entity. For explanations of the intra-logical RAN handover and a manner of the first RAN handover, refer to the descriptions in the embodiment shown in FIG. 4. Details are not described herein again.

The second indication information and the first marking information may be included in a same message, or may be included in different messages. The second indication information and the first marking information may be sent in sequence, or the second indication information and the first marking information may be sent at the same time.

It should be noted that, because it is unnecessary to wait for a UPF entity and an SMF entity to update a configuration related to the first RAN handover, time for ending data transmission may be indicated by a RAN side. Therefore, the source base station sends the first marking information to the AMF entity to indicate that the source base station has ended data forwarding with the target base station.

S602: The AMF entity sends first indication information and the first marking information to the UPF entity, where the first indication information indicates that the first RAN handover is the intra-logical RAN handover.

Specifically, after receiving the second indication information sent by the source base station, the AMF entity determines that the first RAN handover is the intra-logical RAN handover, and then the AMF entity may send the first indication information to the UPF entity.

Optionally, the AMF entity may send acknowledgment information to the source base station based on the second indication information. Optionally, the AMF entity may send the acknowledgment information to the target base station based on the second indication information. After receiving the acknowledgment information, the target base station forwards the acknowledgment information to the source base station. The acknowledgment information indicates acknowledgement that the first RAN handover is the intra-logical RAN handover, and the acknowledgment information may also indicate to acknowledge that the first RAN handover is to be performed. Because the AMF entity determines that the first RAN handover is the intra-logical RAN handover, the AMF entity, the SMF entity, and the UPF entity do not need to update the configuration related to the first RAN handover through information exchange. Therefore, after receiving the second indication information, the AMF entity directly sends the acknowledgment information to the source base station without waiting for the SMF entity and the UPF entity to update the configuration related to the first RAN handover.

S603: The UPF entity maintains, based on the first indication information, the configuration related to the first RAN handover.

It may be understood that, the UPF entity determines that the first RAN handover is the intra-logical RAN handover, and does not update the configuration related to the first RAN handover. The AMF entity, the UPF entity, and the AMF entity do not need to update the configuration related to the first RAN handover through information exchange. The configuration related to the first RAN handover may include a relevant configuration, path information, tunnel information, or the like of a PDU session.

S604: The UPF entity sends data to the target base station based on the first marking information.

Specifically, the UPF entity determines, based on the first marking information, that the source base station has ended data forwarding with the target base station. Therefore, the UPF entity then sends data to the target base station, to ensure data integrity of the target base station.

Optionally, if the target base station does not receive the data sent by the UPF entity, or does not receive, within a preset duration, the data sent by the UPF entity, the target base station sends a notification message to the source base station. The notification message indicates the source base station to continue to send the first marking information and/or the second indication information to the AMF entity. After receiving the first marking information and/or the second indication information, the AMF entity sends the first indication information and/or the first marking information to the UPF entity, so that the UPF entity sends data to the target base station based on the first marking information, and does not update, based on the first indication information, the configuration related to the first RAN handover.

Optionally, in consideration of handover latency, beam direction adjustment latency of a terrestrial station, and the like, the AMF entity may send the handover preparation time to the UPF entity, where the handover preparation time indicates a waiting duration required for performing the intra-logical RAN handover. In this way, the UPF entity can send data to the source base station based on the handover preparation time. The handover preparation time may indicate a time period in which sending of data is allowed. The UPF entity may wait for a period of time and then send data to the source base station within the handover preparation time. Alternatively, the handover preparation time may indicate a time period that needs to be waited before sending of data. The UPF entity may send data to the source base station after the handover preparation time. Alternatively, the handover preparation time may indicate a time point at which sending of data is allowed. The UPF entity may send data to the source base station after the handover preparation time is reached.

In this embodiment of this application, the AMF entity sends, by receiving the second indication information and the first marking information sent by the source base station, the first indication information and the first marking information to the UPF entity; and indicates, via the first indication information, that the first RAN handover is the intra-logical RAN handover. In this way, the SMF entity and the UPF entity learn that the current RAN handover is the intra-logical RAN handover, and do not need to update the configuration related to the handover, thereby reducing information exchanged among the AMF entity, the SMF entity, and the UPF entity, lowering signaling overhead, and decreasing handover latency. In addition, sending data to the target base station via the first marking information ensures data integrity of the target base station.

It may be understood that in the foregoing method embodiments, the method and the operation implemented by the AMF entity may alternatively be implemented by a component (for example, a chip or a circuit) that can be used in the AMF entity, the method and the operation implemented by the UPF entity may alternatively be implemented by a component (for example, a chip or a circuit) that can be used in the UPF entity, and the method and the operation implemented by the access network device may alternatively be implemented by a component (for example, a chip or a circuit) that can be used in the access network device.

In embodiments of this application, functional modules of the terminal device or the network device may be obtained through division based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division corresponding to each function.

The foregoing describes in detail, with reference to FIG. 3 to FIG. 6, the methods provided in embodiments of this application. The following describes in detail, with reference to FIG. 7 to FIG. 9, the communication apparatuses provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

FIG. 7 is a diagram of a structure of a communication apparatus according to an embodiment of this application. The communication apparatus may include a receiving module 701, a processing module 702, and a sending module 703.

Optionally, the communication apparatus may implement steps or procedures performed by the AMF entity in the foregoing method embodiments. For example, the communication apparatus may be the AMF entity, or a chip or a circuit configured in the AMF entity. The receiving module 701 and the sending module 703 are configured to perform receiving and sending related operations on an AMF entity side in the foregoing method embodiments. The processing module 702 is configured to perform processing related operations of the AMF entity in the foregoing method embodiments.

The processing module 702 is configured to determine that a first radio access network RAN handover is an intra-logical RAN handover, where the first RAN handover is a handover from a second access network device to a first access network device.

The sending module 703 is configured to send first indication information to a user plane function UPF entity, where the first indication information indicates that the first RAN handover is the intra-logical RAN handover.

Optionally, the intra-logical RAN handover indicates that the first access network device and the second access network device serve a same cell, store same configuration of a terminal device, and communicate with each other via an Xn interface.

Optionally, the receiving module 701 is configured to receive second indication information sent by the first access network device or the second access network device, where the second indication information indicates that the first RAN handover is the intra-logical RAN handover.

Optionally, the sending module 703 is further configured to send acknowledgment information to the first access network device or the second access network device based on the second indication information.

Optionally, the processing module 702 is further configured to determine, based on first ephemeris information of the first access network device and second ephemeris information of the second access network device, that the first RAN handover is the intra-logical RAN handover.

Optionally, the receiving module 701 is further configured to receive first marking information from the second access network device.

The sending module 703 is further configured to send the first marking information to the UPF entity, where the first marking information indicates to send data to the first access network device.

Optionally, the sending module 703 is further configured to send the handover preparation time to the UPF entity or the second access network device, where the handover preparation time indicates a waiting duration for performing the intra-logical RAN handover.

Optionally, a manner of the first RAN handover includes at least one of the following: conditional handover, handover without changing a physical cell identifier PCI, or random access channel-free handover.

It should be noted that, for implementation of the modules, refer to the corresponding descriptions in the method embodiments shown in FIG. 3 to FIG. 6. The modules perform the methods and the functions performed by the AMF entity in the foregoing embodiments.

FIG. 8 is a diagram of a structure of a communication apparatus according to an embodiment of this application. The communication apparatus may include a receiving module 801, a processing module 802, and a sending module 803.

Optionally, the communication apparatus may implement steps or procedures performed by the UPF entity in the foregoing method embodiments. For example, the communication apparatus may be the UPF entity, or a chip or a circuit configured in the UPF entity. The receiving module 801 and the sending module 803 are configured to perform receiving and sending related operations on a UPF entity side in the foregoing method embodiments. The processing module 802 is configured to perform processing related operations of the UPF entity in the foregoing method embodiments.

The receiving module 801 is configured to receive first indication information from an access and mobility management function AMF entity, where the first indication information indicates that a first RAN handover is an intra-logical RAN handover, and the first RAN handover is a handover from a second access network device to a first access network device.

The processing module 802 is configured to maintain, based on the first indication information, a configuration related to the first RAN handover.

Optionally, the intra-logical RAN handover indicates that the first access network device and the second access network device serve a same cell, store same configuration of a terminal device, and communicate with each other via an Xn interface.

Optionally, the receiving module 801 is further configured to receive first marking information from the AMF entity, where the first marking information indicates a completion status of data forwarding between the second access network device and the first access network device.

The sending module 803 is configured to send data to the first access network device based on the first marking information.

Optionally, the sending module 803 is further configured to send second marking information to the second access network device, where the second marking information indicates a completion status of data transmission between the user plane function UPF entity and the second access network device.

Optionally, the receiving module 801 is further configured to receive handover preparation time from the AMF entity, where the handover preparation time indicates a waiting duration for performing the intra-logical RAN handover.

The sending module 803 is further configured to send the second marking information to the second access network device based on the handover preparation time.

Optionally, a manner of the first RAN handover includes at least one of the following: conditional handover, handover without changing a physical cell identifier PCI, or random access channel-free handover.

It should be noted that, for implementation of the modules, refer to the corresponding descriptions in the method embodiments shown in FIG. 3 to FIG. 6. The modules perform the methods and the functions performed by the UPF entity in the foregoing embodiments.

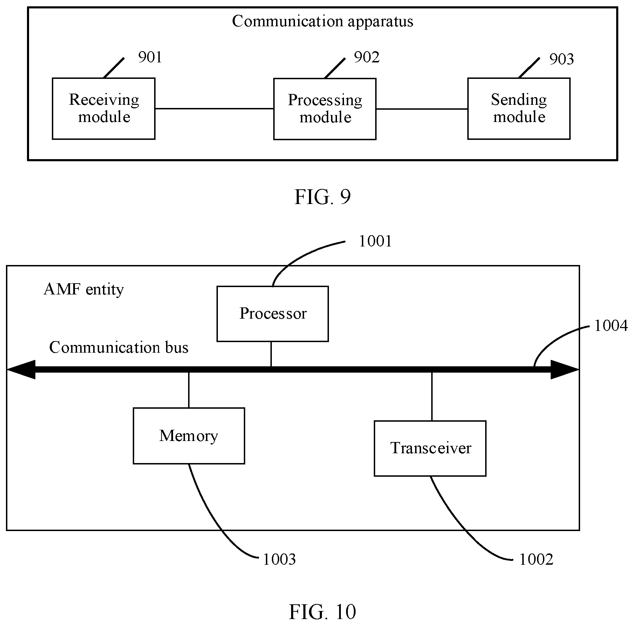

FIG. 9 is a diagram of a structure of a communication apparatus according to an embodiment of this application. The communication apparatus may include a receiving module 901, a processing module 902, and a sending module 903.

Optionally, the communication apparatus may implement steps or procedures performed by the first access network device or the second access network device in the foregoing method embodiments. For example, the communication apparatus may be an access network device, or a chip or a circuit configured in the access network device. The receiving module 901 and the sending module 903 are configured to perform operations related to receiving and sending of the first access network device or the second access network device in the foregoing method embodiments. The processing module 902 is configured to perform operations related to processing of the first access network device or the second access network device in the foregoing method embodiments.

### In an embodiment:

The processing module 902 is configured to determine that a first radio access network RAN handover is an intra-logical RAN handover, where the first RAN handover is a handover from a second access network device to a first access network device.

The sending module 903 is configured to send second indication information to an access and mobility management function AMF entity, where the second indication information indicates that the first RAN handover is the intra-logical RAN handover.

Optionally, the intra-logical RAN handover indicates that the first access network device and the second access network device serve a same cell, store same configuration of a terminal device, and communicate with each other via an Xn interface.

Optionally, the receiving module 901 is configured to receive acknowledgment information from the AMF entity.

Optionally, the receiving module 901 is further configured to receive data from a user plane function UPF entity.

Optionally, the sending module 903 is further configured to if the data sent by the UPF entity is not received, send a notification message to the second access network device, where the notification message indicates the second access network device to send first marking information to the AMF entity, and the first marking information indicates a completion status of data forwarding between the second access network device and the first access network device.

### In another embodiment:

The processing module 902 is configured to determine that a first radio access network RAN handover is an intra-logical RAN handover, where the first RAN handover is a handover from a second access network device to a first access network device.

The sending module 903 is configured to send second indication information to an access and mobility management function AMF entity, where the second indication information indicates that the first RAN handover is the intra-logical RAN handover.

Optionally, the intra-logical RAN handover indicates that the first access network device and the second access network device serve a same cell, store same configuration of a terminal device, and communicate with each other via an Xn interface.

Optionally, the receiving module 901 is further configured to receive handover preparation time from the AMF entity, where the handover preparation time indicates a waiting duration for performing the intra-logical RAN handover.

Optionally, the sending module 903 is further configured to send first marking information to the AMF entity, where the first marking information indicates a completion status of data forwarding between the second access network device and the first access network device.

Optionally, the receiving module 901 is further configured to receive a notification message from the first access network device; and the sending module 903 is further configured to send the first marking information to the AMF entity based on the notification message.

Optionally, the receiving module 901 is further configured to receive second marking information from a user plane function UPF entity, where the second marking information indicates a completion status of data transmission between the user plane function UPF entity and the second access network device; and the sending module 903 is further configured to send the second marking information to the first access network device, where the second marking information is used for assisting the first access network device in sorting received data.

It should be noted that, for implementations of the modules, refer to corresponding descriptions in the method embodiments shown in FIG. 3 to FIG. 6. The modules perform the methods and the functions performed by the first access network device and the second access network device in the foregoing embodiments.

FIG. 10 is a diagram of a structure of an AMF entity according to an embodiment of this application. The AMF entity may be used in the system shown in FIG. 1, to perform the functions of the AMF entity in the foregoing method embodiments, or implement the steps or the procedures performed by the AMF entity in the foregoing method embodiments.

As shown in FIG. 10, the AMF entity includes a processor 1001 and a transceiver 1002. Optionally, the AMF entity further includes a memory 1003. The processor 1001, the transceiver 1002, and the memory 1003 may communicate with each other by using an internal connection path, to transmit a control signal and/or a data signal. The memory 1003 is configured to store a computer program, and the processor 1001 is configured to invoke the computer program from the memory 1003 and run the computer program, to control the transceiver 1002 to receive/send a signal. Optionally, the AMF entity may further include an antenna, configured to send, by using a radio signal, uplink data or uplink control signaling output by the transceiver 1002.

The processor 1001 and the memory 1003 may be combined into one processing apparatus, and the processor 1001 is configured to execute program code stored in the memory 1003 to implement the foregoing function. During specific implementation, the memory 1003 may alternatively be integrated into the processor 1001, or may be independent of the processor 1001. The processor 1001 may correspond to the processing module in FIG. 7.

The transceiver 1002 may correspond to the receiving module and the sending module in FIG. 7, and may also be referred to as a transceiver unit or a transceiver module. The transceiver 1002 may include a receiver (or referred to as a receiver machine or a receiving circuit) and a transmitter (or referred to as a transmitter machine or a transmitting circuit). The receiver is configured to receive a signal, and the transmitter is configured to transmit a signal.

It should be understood that the AMF entity shown in FIG. 10 can implement the processes related to the AMF entity in the method embodiments shown in FIG. 3 to FIG. 6. Operations and/or functions of the modules in the AMF entity are respectively for implementing the corresponding procedures in the foregoing method embodiments. For details, refer to the descriptions in the foregoing method embodiments. To avoid repetition, detailed descriptions are properly omitted herein.

The processor 1001 may be configured to perform an action that is implemented inside the AMF entity and that is described in the foregoing method embodiment. The transceiver 1002 may be configured to perform an action that is sent by the AMF entity to a UPF entity or received from an access network device and that is described in the foregoing method embodiment. For details, refer to the descriptions in the foregoing method embodiments. Details are not described herein again.

The processor 1001 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 1001 may be a combination implementing a computing function, for example, a combination of one or more microprocessors or a combination of a digital signal processor and a microprocessor. A communication bus 1004 may be a peripheral component interconnect PCI bus, an extended industry standard architecture EISA bus, or the like. The bus may be classified into an address bus, a data bus, a control bus, and the like. For ease of representation, only one bold line is for representing the bus in FIG. 10, but this does not mean that there is only one bus or only one type of bus. The communication bus 1004 is configured to implement connection and communication between these components. The transceiver 1002 in this embodiment of this application is configured to perform signaling or data communication with another node device. The memory 1003 may include a volatile memory, for example, a non-volatile dynamic random access memory (non-volatile random access memory, NVRAM), a phase change random access memory (phase change RAM, PRAM), or a magnetoresistive random access memory (magnetoresistive RAM, MRAM); or may include a non-volatile memory, for example, at least one magnetic disk storage device, an electrically erasable programmable read-only memory (electrically erasable programmable read-only memory, EEPROM), a flash memory like a NOR flash memory (NOR flash memory) or a NAND flash memory (NAND flash memory), or a semiconductor device like a solid-state drive (solid-state drive, SSD). Optionally, the memory 1003 may alternatively be at least one storage apparatus located away from the processor 1001. Optionally, the memory 1003 may further store a group of computer program code or configuration information. Optionally, the processor 1001 may further execute the program stored in the memory 1003. The processor may cooperate with the memory and the transceiver to perform any method and function of the AMF entity in the foregoing embodiments of this application.

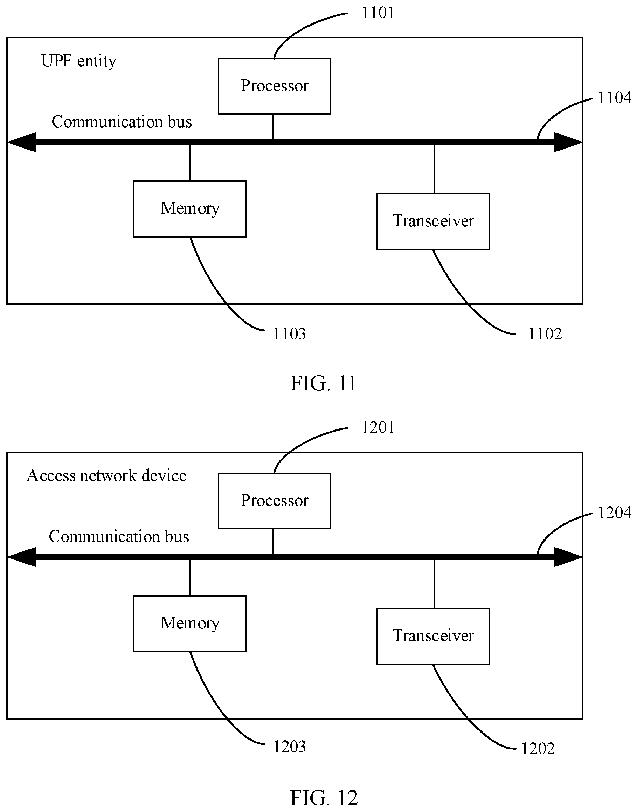

FIG. 11 is a diagram of a structure of a UPF entity according to an embodiment of this application. The UPF entity may be used in the system shown in FIG. 1, to perform the functions of the UPF entity in the foregoing method embodiments, or implement the steps or the procedures performed by the UPF entity in the foregoing method embodiments.

As shown in FIG. 11, the UPF entity includes a processor 1101 and a transceiver 1102. Optionally, the UPF entity further includes a memory 1103. The processor 1101, the transceiver 1102, and the memory 1103 may communicate with each other by using an internal connection path, to transmit a control signal and/or a data signal. The memory 1103 is configured to store a computer program, and the processor 1101 is configured to invoke the computer program from the memory 1103 and run the computer program, to control the transceiver 1102 to receive/send a signal. Optionally, the UPF entity may further include an antenna, configured to send, by using a radio signal, uplink data or uplink control signaling output by the transceiver 1102.

The processor 1101 and the memory 1103 may be combined into one processing apparatus, and the processor 1101 is configured to execute program code stored in the memory 1103 to implement the foregoing function. During specific implementation, the memory 1103 may alternatively be integrated into the processor 1101, or may be independent of the processor 1101. The processor 1101 may correspond to the processing module in FIG. 8.

The transceiver 1102 may correspond to the receiving module and the sending module in FIG. 8, and may also be referred to as a transceiver unit or a transceiver module. The transceiver 1102 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the UPF entity shown in FIG. 11 can implement the processes related to the UPF entity in the method embodiments shown in FIG. 3 to FIG. 6. Operations and/or functions of the modules in the UPF entity are respectively for implementing the corresponding procedures in the foregoing method embodiments. For details, refer to the descriptions in the foregoing method embodiments. To avoid repetition, detailed descriptions are properly omitted herein.

The processor 1101 may be configured to perform an action that is implemented inside the UPF entity and that is described in the foregoing method embodiment. The transceiver 1102 may be configured to perform an action that is sent by the UPF entity to an access network device or received from an AMF entity and that is described in the foregoing method embodiment. For details, refer to the descriptions in the foregoing method embodiments. Details are not described herein again.

The processor 1101 may be processors of various types that are mentioned above. A communication bus 1104 may be a peripheral component interconnect PCI bus, an extended industry standard architecture EISA bus, or the like. The bus may be classified into an address bus, a data bus, a control bus, and the like. For ease of representation, only one bold line is for representing the bus in FIG. 11, but this does not mean that there is only one bus or only one type of bus. The communication bus 1104 is configured to implement connection and communication between these components. The transceiver 1102 of the device in this embodiment of this application is configured to perform signaling or data communication with another device. The memory 1103 may be memories of various types mentioned above. Optionally, the memory 1103 may alternatively be at least one storage apparatus located away from the processor 1101. The memory 1103 stores a group of computer program code or configuration information, and the processor 1101 executes the program in the memory 1103. The processor may cooperate with the memory and the transceiver to perform any method and function of the UPF entity in the foregoing embodiments of this application.

FIG. 12 is a diagram of a structure of an access network device according to an embodiment of this application. The access network device may be used in the system shown in FIG. 1, to perform a function of the first access network device or the second access network device in the foregoing method embodiment, or implement a step or procedure performed by the first access network device or the second access network device in the foregoing method embodiment.

As shown in FIG. 12, the access network device includes a processor 1201 and a transceiver 1202. Optionally, the access network device further includes a memory 1203. The processor 1201, the transceiver 1202, and the memory 1203 may communicate with each other by using an internal connection path, to transmit a control signal and/or a data signal. The memory 1203 is configured to store a computer program, and the processor 1201 is configured to invoke the computer program from the memory 1203 and run the computer program, to control the transceiver 1202 to receive/send a signal. Optionally, the access network device may further include an antenna, configured to send, via a radio signal, uplink data or uplink control signaling output by the transceiver 1202.

The processor 1201 and the memory 1203 may be combined into one processing apparatus, and the processor 1201 is configured to execute program code stored in the memory 1203 to implement the foregoing function. During specific implementation, the memory 1203 may alternatively be integrated into the processor 1201, or may be independent of the processor 1201.

The transceiver 1202 may correspond to the receiving module and the sending module in FIG. 9, and may also be referred to as a transceiver unit or a transceiver module. The transceiver 1202 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the access network device shown in FIG. 12 can implement processes related to the access network device in the method embodiments in FIG. 3 to FIG. 6. Operations and/or functions of modules in the access network device are separately intended to implement the corresponding procedures in the foregoing method embodiments. For details, refer to the descriptions in the foregoing method embodiments. To avoid repetition, detailed descriptions are properly omitted herein.

The processor 1201 may be configured to perform an action that is implemented inside the access network device and that is described in the foregoing method embodiments. The transceiver 1202 may be configured to perform an action that is sent by the access network device to an AMF entity or received from a UPF entity and that is described in the foregoing method embodiments. For details, refer to the descriptions in the foregoing method embodiments. Details are not described herein again.

The processor 1201 may be processors of various types mentioned above. A communication bus 1204 may be a peripheral component interconnect PCI bus, an extended industry standard architecture EISA bus, or the like. The bus may be classified into an address bus, a data bus, a control bus, and the like. For ease of representation, only one bold line is for representing the bus in FIG. 12, but this does not mean that there is only one bus or only one type of bus. The communication bus 1204 is configured to implement connection and communication between these components. The transceiver 1202 in the device in this embodiment of this application is configured to perform signaling or data communication with another device. The memory 1203 may be memories of various types mentioned above. Optionally, the memory 1203 may alternatively be at least one storage apparatus located away from the processor 1201. The memory 1203 stores a group of computer program code or configuration information, and the processor 1201 executes the program in the memory 1203. The processor may cooperate with the memory and the transceiver to perform any method and function performed by the first access network device or the second access network device and in the foregoing embodiments of this application.

An embodiment of this application further provides a chip system. The chip system includes a processor, configured to support an AMF entity, a UPF entity, or an access network device in implementing a function in any one of the foregoing embodiments, for example, generating or processing an intra-logical RAN handover in the foregoing method.

In a possible design, the chip system may further include a memory. The memory is configured to a computer program and data that are necessary for the AMF entity, the UPF entity, or the access network device. The chip system may include a chip, or may include a chip and another discrete component. Input and output of the chip system are respectively corresponding to receiving and sending operations of the AMF entity, the UPF entity, or the access network device in the method embodiments.

According to the methods provided in embodiments of this application, this application further provides a computer program product. The computer program product includes a computer program, and when the computer program is run on a computer, the computer is enabled to perform the method according to any one of embodiments shown in FIG. 3 to FIG. 6.

According to the methods provided in embodiments of this application, this application further provides a computer-readable medium. The computer-readable medium stores a computer program, and when the computer program is run on a computer, the computer is enabled to perform the method according to any one of embodiments shown in FIG. 3 to FIG. 6.

According to the method provided in embodiments of this application, this application further provides a communication system, including the foregoing AMF entity, UPF entity, or access network device.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio access network handover method, wherein the method comprises:
determining that a first radio access network RAN handover is an intra-logical RAN handover, wherein the first RAN handover is a handover from a second access network device to a first access network device; and
sending first indication information to a user plane function UPF entity, wherein the first indication information indicates that the first RAN handover is the intra-logical RAN handover.

2. The method according to claim 1, wherein the intra-logical RAN handover indicates that the first access network device and the second access network device serve a same cell, store a same configuration of a terminal device, and communicate with each other via an Xn interface.

3. The method according to claim 1 or 2, wherein the determining that the first radio access network RAN handover is the intra-logical RAN handover comprises:
receiving second indication information sent by the first access network device or the second access network device, wherein the second indication information indicates that the first RAN handover is the intra-logical RAN handover.

4. The method according to claim 3, wherein the method further comprises:
sending acknowledgment information to the first access network device or the second access network device based on the second indication information.

5. The method according to claim 1 or 2, wherein the determining that the first radio access network RAN handover is the intra-logical RAN handover comprises:
determining, based on first ephemeris information of the first access network device and second ephemeris information of the second access network device, that the first RAN handover is the intra-logical RAN handover.

6. The method according to any one of claims 1 to 5, wherein the method further comprises:
receiving first marking information from the second access network device; and
sending the first marking information to the UPF entity, wherein the first marking information indicates to send data to the first access network device.

7. The method according to any one of claims 1 to 6, wherein the method further comprises:
sending handover preparation time to the UPF entity or the second access network device, wherein the handover preparation time indicates a waiting duration required for performing the intra-logical RAN handover.

8. The method according to any one of claims 1 to 7, wherein a manner of the first RAN handover comprises at least one of the following: conditional handover, handover without changing a physical cell identifier PCI, or random access channel-free handover.

9. A radio access network handover method, wherein the method comprises:
receiving first indication information from an access and mobility management function AMF entity, wherein the first indication information indicates that a first RAN handover is an intra-logical RAN handover, and the first RAN handover is a handover from a second access network device to a first access network device; and
maintaining, based on the first indication information, a configuration related to the first RAN handover.

10. The method according to claim 9, wherein the intra-logical RAN handover indicates that the first access network device and the second access network device serve a same cell, store a same configuration of a terminal device, and communicate with each other via an Xn interface.

11. The method according to claim 9 or 10, wherein the method further comprises:
receiving first marking information from the AMF entity, wherein the first marking information indicates a completion status of data forwarding between the second access network device and the first access network device; and
sending data to the first access network device based on the first marking information.

12. The method according to claim 9 or 10, wherein the method further comprises:
sending second marking information to the second access network device, wherein the second marking information indicates a completion status of data transmission between a user plane function UPF entity and the second access network device.

13. The method according to claim 12, wherein the method further comprises:
receiving handover preparation time from the AMF entity, wherein the handover preparation time indicates a waiting duration required for performing the intra-logical RAN handover; and
sending the second marking information to the second access network device based on the handover preparation time.

14. The method according to any one of claims 9 to 13, wherein a manner of the first RAN handover comprises at least one of the following: conditional handover, handover without changing a physical cell identifier PCI, or random access channel-free handover.

15. A radio access network handover method, wherein the method comprises:
determining that a first radio access network RAN handover is an intra-logical RAN handover, wherein the first RAN handover is a handover from a second access network device to a first access network device; and
sending second indication information to an access and mobility management function AMF entity, wherein the second indication information indicates that the first RAN handover is the intra-logical RAN handover.

16. The method according to claim 15, wherein the intra-logical RAN handover indicates that the first access network device and the second access network device serve a same cell, store a same configuration of a terminal device, and communicate with each other via an Xn interface.

17. The method according to claim 15 or 16, wherein the method further comprises:
receiving acknowledgment information from the AMF entity.

18. The method according to any one of claims 15 to 17, wherein the method further comprises:
receiving data from a user plane function UPF entity.

19. The method according to claim 18, wherein the method further comprises:
if no data sent by the UPF entity is received, sending a notification message to the second access network device, wherein the notification message indicates the second access network device to send first marking information to the AMF entity, and the first marking information indicates a completion status of data forwarding between the second access network device and the first access network device.

20. A radio access network handover method, wherein the method comprises:
determining that a first radio access network RAN handover is an intra-logical RAN handover, wherein the first RAN handover is a handover from a second access network device to a first access network device; and
sending second indication information to an access and mobility management function AMF entity, wherein the second indication information indicates that the first RAN handover is the intra-logical RAN handover.

21. The method according to claim 20, wherein the intra-logical RAN handover indicates that the first access network device and the second access network device serve a same cell, store a same configuration of a terminal device, and communicate with each other via an Xn interface.

22. The method according to claim 20 or 21, wherein the method further comprises:
receiving handover preparation time from the AMF entity, wherein the handover preparation time indicates a waiting duration required for performing the intra-logical RAN handover.

23. The method according to any one of claims 20 to 22, wherein the method further comprises:
sending first marking information to the AMF entity, wherein the first marking information indicates a completion status of data forwarding between the second access network device and the first access network device.

24. The method according to claim 23, wherein the method further comprises:
receiving a notification message from the first access network device; and
sending the first marking information to the AMF entity based on the notification message.

25. The method according to any one of claims 20 to 22, wherein the method further comprises:
receiving second marking information from a user plane function UPF entity, wherein the second marking information indicates a completion status of data transmission between the user plane function UPF entity and the second access network device; and
sending the second marking information to the first access network device, wherein the second marking information is used for assisting the first access network device in sorting received data.

26. A communication apparatus, comprising a memory and a processor, wherein the memory is configured to store a computer program, and the processor runs the computer program to cause the communication apparatus to perform the method according to any one of claims 1 to 8.

27. A communication apparatus, comprising a memory and a processor, wherein the memory is configured to store a computer program, and the processor runs the computer program to cause the communication apparatus to perform the method according to any one of claims 9 to 14.

28. A communication apparatus, comprising a memory and a processor, wherein the memory is configured to store a computer program, and the processor runs the computer program to cause the communication apparatus to perform the method according to any one of claims 15 to 19.

29. A communication apparatus, comprising a memory and a processor, wherein the memory is configured to store a computer program, and the processor runs the computer program to cause the communication apparatus to perform the method according to any one of claims 20 to 25.

30. A computer-readable storage medium, wherein the computer-readable storage medium comprises a computer program, and when the computer program is run by a processor, the method according to any one of claims 1 to 8, any one of claims 9 to 14, any one of claims 15 to 19, or any one of claims 20 to 25 is implemented.

31. A chip, wherein the chip comprises a processor and a communication interface, the communication interface is configured to communicate with an external component or an internal component, and the processor is configured to implement the method according to any one of claims 1 to 8, any one of claims 9 to 14, any one of claims 15 to 19, or any one of claims 20 to 25.
